# EUROPÄISCHE PATENTSCHRIFT

(11) **EP 4 552 881 B1**
(45) Veröffentlichungstag und Bekanntmachung des Hinweises auf die Patenterteilung: **05.11.2025**
(21) Anmeldenummer: 23209510.9
(22) Anmeldetag: 13.11.2023
(51) Int. Cl.: B60K 1/04, B62D 21/15

(54) **BATTERIETRÄGER**
BATTERY SUPPORT
SUPPORT DE BATTERIE

(43) Veröffentlichungstag der Anmeldung: 14.05.2025
(73) Patentinhaber: Benteler Automobiltechnik GmbH, 33102 Paderborn (DE)
(72) Erfinder: HANDING, Christian, 33449 Langenberg (DE); MICHEL, Kai, 33154 Salzkotten (DE); SCHMITZ, Stefan, 33739 Bielefeld (DE)
(74) Vertreter: Ksoll, Peter

(56) Entgegenhaltungen:
- EP-B1- 3 468 821
- DE-A1- 102018 126 068
- DE-A1- 102021 000 361
- US-B2- 10 780 926

## Beschreibung

Die Erfindung betrifft einen Batterieträger gemäß den Merkmalen im Oberbegriff von Anspruch 1.

Zur Halterung von Batterieelementen für die Bereitstellung elektrischer Energie in elektrisch angetriebenen Fahrzeugen werden Batterieträger verwendet, die zwischen den Achsen des Fahrzeugs angeordnet sind. Zu den wesentlichen sicherheitstechnischen Anforderungen an einen Batterieträger gehört eine gute Crashperformance. Um diesen zu genügen ist die Batteriewanne durch eine äußere Verstärkungsstruktur geschützt.

Durch die DE 10 2018 126 068 A1 zählt ein Batterieträger für ein Elektrofahrzeug zum Stand der Technik. Der Batterieträger weist eine Batteriewanne auf, die in einem äußeren Rahmen eingesetzt ist und durch einen Deckel verschlossen ist. Der Rahmen ist im Querschnitt aus mindestens zwei miteinander gefügten Profilbauteilen hergestellt, wobei mindestens eines dieser Profilbauteile als Blechumformbauteil hergestellt ist.

Die EP 3 468 821 B1 offenbart einen Batteriekasten für ein Kraftfahrzeug mit einem Strukturrahmen, der als Verstärkungsstruktur fungiert. Der Strukturrahmen ist über Befestigungsmittel mit einer Kraftfahrzeugkarosserie verbindbar, wobei die Befestigungsmittel als Hülsen ausgebildet sind. Die Hülsen erstrecken sich zwischen einer Oberseite und einer Unterseite eines Befestigungsabschnitts in einem Profilsegment des Strukturrahmens und sind im Wesentlichen formschlüssig gegen seitliches Verschieben gehalten.

Die Batterieträger müssen mechanisch stabil sein und an der Karosserie bzw. am Fahrgestell eines Fahrzeugs befestigt werden. Die Batteriewanne soll weitestgehend in die Karosserie integriert werden, wodurch sich konstruktive und montagetechnische Herausforderungen stellen.

Die äußere Verstärkungsstruktur vor einer Seitenwand der Batteriewanne besteht aus mehreren Bauteilen sowie Einbau- und Anbauteilen. Diese sind untereinander und mit der Batteriewanne verschweißt. Die hohe Anzahl von einzelnen Bauteilen und die Vielzahl von Schweißverbindungen kann zu einem Verzug in der Schweißkonstruktion führen. Auch führt die hohe Anzahl von einzelnen Bauteilen zu einer Erhöhung von Toleranzen bzw. Toleranzketten. Diese ebenso wie ein Schweißverzug müssen ausgeglichen werden um eine serientaugliche Anbindung der Batteriewanne in einem Kraftfahrzeug zu gewährleisten. Der Batterieträger selbst wird mittels Befestigungsmitteln üblicherweise Schraubverbindungsmittel an der Karosserie bzw. dem Fahrgestell eines Fahrzeugs festgelegt. Die Festlegung des Batterieträgers erfolgt insbesondere an Seitenschwellern und gegebenenfalls Bodenquerträgern im Kraftfahrzeug. Die Anschraubpunkte bilden dabei die Schnittstelle zur Fahrzeugkarosserie, so dass hohe Anforderungen an deren Positionsgenauigkeit gestellt werden.

Der Erfindung liegt ausgehend vom Stand der Technik die Aufgabe zugrunde, einen funktional und montagetechnisch verbesserten Batterieträger zu schaffen mit einer flexiblen Einstellmöglichkeit und hoher Positionsgenauigkeit der Montagepunkte.

Die Lösung dieser Aufgabe besteht in einem Batterieträger gemäß Anspruch 1.

Vorteilhafte Ausgestaltungen und Weiterbildungen des erfindungsgemäßen Batterieträgers sind Gegenstand der abhängigen Ansprüche.

Ein Batterieträger zur Halterung von Batterieelementen für die Bereitstellung elektrischer Energie in elektrisch angetriebenen Fahrzeugen weist eine Batteriewanne mit einer Verstärkungsstruktur auf, die außenseitig vor zumindest einer Seitenwand der Batteriewanne angeordnet ist. Die Verstärkungsstruktur erstreckt sich in Längsrichtung der Seitenwand und umfasst ein Hohlprofil, welches vorzugsweise aus einem Innenprofil und einem Schließblech gebildet ist. Das Innenprofil und das Schließblech bilden zumindest auf dem überwiegenden Teil der Länge der Verstärkungsstruktur ein kastenförmiges Hohlprofil. Das Innenprofil ist im Querschnitt U-förmig konfiguriert und weist einen rückseitigen Steg und einen ersten oberen Schenkel und zweiten unteren Schenkel auf. In jedem Schenkel ist eine Öffnung vorgesehen. Der Steg ist parallel zur Seitenwand der Batteriewanne orientiert. Der obere Schenkel und der untere Schenkel des Innenprofils weisen von der Batteriewanne weg, so dass eine Offenseite des Innenprofils außen liegt. Die Offenseite des Innenprofils ist zumindest längenabschnittsweise durch das Schließblech geschlossen.

Das Schließblech kann schalenförmig konfiguriert sein bzw. in Form einer Außenschale profiliert sein mit einer Außenwand und in Richtung zum Innenprofil ragenden Stegen, insbesondere Fügestegen.

Das Hohlprofil der Verstärkungsstruktur kann auch ein Einkammerprofil oder ein Mehrkammerprofil sein. Eine Hülse wird dann vorzugsweise von unten durch eine Öffnung in einem Schenkel geschoben und durch den Durchgang im Passblech geführt.

In der Verstärkungsstruktur sind mehrere Hülsen vorgesehen. Hierbei handelt es sich um Befestigungs- bzw. Montagehülsen, welche insbesondere zylindrisch oder rechteckförmig ausgebildet sind. Üblicherweise sind in Längsrichtung der Verstärkungsstruktur mehrere mit einem Abstand zueinander angeordnete Hülsen vorgesehen. Eine Hülse erstreckt sich zwischen den Schenkeln des Hohlprofils über die gesamte Höhe des Hohlprofils. Eine Hülse verbindet die Öffnungen in den Schenkeln, wobei ein Hülsenabschnitt, insbesondere ein Hülsenabschnitt am oberen Ende der Hülse durch die Öffnung im ersten oberen Schenkel ragt. Die Hülsen dienen zur Durchführung von Befestigungsmitteln, über welche der Batterieträger in der Karosserie bzw. dem Fahrgestell festgelegt wird. Insbesondere erfolgt über die Hülsen und geeignete Befestigungsmittel eine Festlegung des Batterieträgers an Seitenschwellern und gegebenenfalls Bodenträgern im Kraftfahrzeug.

Die Öffnungen in den Schenkeln können in sich geschlossen sein und einen umlaufenden Rand aufweisen. Die Öffnungen können beispielsweise rund ausgeführt sein.

Eine vorteilhafte Ausführungsform sieht vor, dass zumindest eine Öffnung, insbesondere die erste Öffnung im ersten oberen Schenkel, randseitig offen ist. Die Öffnung ist vorzugsweise als Schlitz im ersten Schenkel ausgeführt. Es handelt sich folglich um eine längliche Öffnung im ersten Schenkel, wobei die Öffnung vom freien Ende des Schenkels ausgeht. Diese schlitz- oder langlochartige Öffnung ist quer zur Längsachse des Hohlprofils im ersten Schenkel gerichtet.

Erfindungsgemäß ist ein Passblech mit einem Durchgang für die Hülse vorgesehen. Die Hülse ist mit einem Hülsenabschnitt durch den Durchgang geführt. Das Passblech bedeckt die erste Öffnung im ersten Schenkel oder die zweite Öffnung im zweiten Schenkel zumindest bereichsweise, insbesondere vollständig.

Bedecken bedeutet, dass das Passblech die Hülse mit dem Durchgang umschließt und den verbleibenden Raum zwischen dem Rand der Öffnung und der Hülse schließt. Hierbei kann das Passblech auf dem Schenkel liegen oder unterseitig an dem Schenkel anliegen. Insbesondere überlappt oder unterlappt ein Passblech die Öffnung im ersten Schenkel oder die Öffnung im zweiten Schenkel. Insbesondere liegt das Passblech außenseitig am ersten Schenkel an. Das Passblech liegt dann mit einer Überlappung auf dem die Öffnung im ersten Schenkel begrenzenden Rand auf.

Das Passblech ist dazu eingerichtet und bestimmt, Toleranzen innerhalb des Zusammenbaus der Verstärkungsstruktur auszugleichen und/oder die Position der Hülse im Hohlprofil beim bzw. nach dem Zusammenbau und vor einer Fügung der Hülse zu justieren. Das Passblech wird zum Ausgleich von Toleranzen und Distanzen zwischen den Bauteilen der Verstärkungsstruktur eingesetzt und dient als Positionierelement für die Hülse in der Verstärkungsstruktur und damit zur Einstellung des Montagepunktes und dessen Position.

Das Passblech überlappt den eine Öffnung im ersten Schenkel oder im zweiten Schenkel umgebenden bzw. benachbarten Rand. Wenn das Passblech unterhalb der Öffnung angeordnet ist unterlappt das Passblech die Öffnung randseitig. Die Überlappung bzw. Unterlappung ist so groß, dass das Passblech und die durch den Durchgang geführte Hülse positioniert und ausgerichtet werden kann und die Öffnung durch das Passblech abgedeckt ist.

Das Passblech kann in einer Aufnahme im Schenkel positioniert sein. Eine Aufnahme ist insbesondere durch eine Vertiefung in einem der Schenkel, insbesondere im ersten Schenkel, ausgebildet.

Eine besonders vorteilhafte Ausgestaltung sieht vor, dass der Durchgang einen Kragen, insbesondere einen in sich geschlossen umlaufenden Kragen aufweist. Mit dem Kragen umschließt der Durchgang den Außenumfang der Hülse. Dies ist funktional aber auch montagetechnisch vorteilhaft.

Insbesondere ist der Kragen nach außen vom Hohlprofil weg gerichtet. Möglich ist es aber auch, dass der Kragen nach innen in das Hohlprofil gerichtet ist. Insbesondere, wenn das Passblech innenseitig des Hohlprofils vorgesehen ist und auf der Innenseite des Hohlprofils an einem Schenkel anliegt und die korrespondierende Öffnung bedeckt, ist der Kragen nach innen in das Innere des Hohlprofils gerichtet.

Eine für die Praxis besonders vorteilhafte Ausführungsform sieht vor, dass das Hohlprofil ein Innenprofil und ein Schließblech umfasst, wobei das Innenprofil im Querschnitt U-förmig konfiguriert ist mit einem rückseitigen Steg und dem ersten Schenkel sowie dem zweiten Schenkel. Die beiden Schenkel des Innenprofils sind von der Batteriewanne weg gerichtet, weisen also, von der Batteriewanne aus gesehen, nach außen. Das Innenprofil ist durch das Schließblech zumindest längenabschnittsweise geschlossen.

Diese Ausgestaltung ist funktional und in der Crashperformance vorteilhaft. Das Steifigkeitsverhalten der Verstärkungsstruktur ist belastungsoptimiert. Das Innenprofil ist über die Offenseite gut zugänglich. Hierdurch wird die Funktionalität, insbesondere die Zugänglichkeit und Montage des Innenprofils selbst, ebenso wie im Innenprofil zu montierenden Einbauteilen verbessert. Das Innenprofil und das Schließblech ergänzen sich synergistisch zum Hohlprofil der Verstärkungsstruktur. Dieses zeichnet sich durch ein vorteilhaftes statisches und dynamisches Belastungsverhalten aus. Insbesondere ist die Steifigkeit der Verstärkungsstruktur zur Batteriewanne hoch. Dabei können die Schenkel des Innenprofils bzw. des Hohlprofils bei einem Seitenaufprall und der Energieabbau deformieren, wobei das Schließblech als Zugstrebe fungiert und die Schenkel bis zu einem gewissen Grad in Position halten.

Eine weitere vorteilhafte Ausgestaltung sieht vor, dass eine Hülse oder mehrere Hülsen jeweils mit einem oberen Hülsenabschnitt durch die erste Öffnung im ersten Schenkel geführt ist und gegenüber einer Außenseite des ersten Schenkels vorsteht. Möglich ist es auch, dass die Hülse oder mehrere Hülsen mit einem unteren Hülsenabschnitt durch die zweite Öffnung im zweiten Schenkel geführt ist und gegenüber einer Außenseite des zweiten Schenkels vorsteht. Der vorstehende bzw. überstehende Abschnitt der Hülse dient insbesondere als Anbindungsfläche zum stoffschlüssigen Verbinden mit dem Passblech, insbesondere in Form wenigstens einer teilweise umlaufenden Schweißnaht oder einer formschlüssigen und/oder kraftschlüssigen Fügeverbindung wie Crimpen oder Bördeln.

Eine weitere vorteilhafte Ausführungsform sieht vor, dass die Hülsen einen oberen und/oder einen unteren Bund aufweisen. Die Hülsen weisen einen Hülsenkörper auf. An einem oder an beiden Enden des Hülsenkörpers ist ein insbesondere umlaufender Bund vorgesehen. Der Bund ist vom Hülsenkörper nach auswärts orientiert. Insbesondere ist der Bundwerkstoff einheitlicher Bestandteil der Hülse bzw. des Hülsenkörpers.

Es ist auch möglich, dass ein Bund durch einen separaten Bundkörper, insbesondere einen Ring, gebildet ist. Der Bund stellt mithin eine ringförmige Abstufung von der Außenfläche des im Wesentlichen zylindrischen Hülsenkörpers dar. Im Rahmen der Erfindung kann eine oder mehrere Hülsen jedoch auch eine mehreckige Grundform aufweisen.

Vorzugsweise weist eine Hülse einen unteren Bund auf. Mit dem unteren Bund am unteren Ende des Hülsenkörpers steht die Hülse innenseitig auf dem zweiten unteren Schenkel auf. Durch den unteren Bund wird insbesondere die Kontaktfläche zum Fügen mit dem zweiten Schenkel vergrößert und funktional verbessert.

Anstelle eines Bundes kann auch ein zweites Passblech mit derselben Funktion wie der Bund der Hülse vorgesehen sein.

Es ist auch möglich, dass die Hülse mit dem Hülsenkörper durch die zweite Öffnung im zweiten unteren Schenkel geführt ist und der untere Bund außenseitig am zweiten Schenkel anliegt.

Ein Bund nimmt Reib- und Druckkräfte auf, die beim Anziehen von durch die Hülse bzw. den Hülsenkörper geführten Montageelementen beispielsweise Schraubverbindungselementen entstehen. Hierdurch kann die Oberfläche der Bauteile im Bereich einer Schraubverbindung vor Beschädigungen geschützt und die Flächenpressung reduziert werden.

Die Schenkel des Hohlprofils bzw. die Schenkel des Innenprofils und/oder das Schließblech können Fügelaschen aufweisen. Vorzugsweise sind mehrere, mit Abstand zueinander angeordnete Fügelaschen in Längsrichtung des Innenprofils entlang von Längskantenabschnitten der Schenkel vorgesehen. Die Fügelaschen stehen nach außengerichtet vor. Vorzugsweise ist an jedem Schenkel entlang seines Längskantenabschnitts eine alternierende Reihe von Fügelaschen vorgesehen. Die Fügelaschen liegen in Längsrichtung eines Schenkels mit Abstand zueinander, so dass jeweils zwischen den Fügelaschen freie Räume vorhanden sind. Das Schließblech stützt sich an den freien Enden bzw. den Längskantenabschnitten der Schenkel und/oder an den Fügelaschen der Schenkel ab. Die Fügelaschen können in einem Winkel zu einem Schenkel angestellt sein, wobei die Fügelaschen, insbesondere vom freien Ende der Schenkel weg, nach außen gerichtet sind. Hierdurch wird die Zugänglichkeit verbessert, insbesondere für die Herstellung von Punktschweißverbindungen.

Das Schließblech kann ebenfalls Fügelaschen bzw. Fügestege aufweisen, welche sich an den Schenkeln des Innenprofils abstützen. Insbesondere liegt das Schließblech mit Fügestegen bereichsweise an den Fügelaschen an.

Das Schließblech ist mit dem Innenprofil stoffschlüssig verbunden. Dies erfolgt über eine stoffschlüssige Fügung zwischen den Fügelaschen des Innenprofils und den Fügestegen des Schließblech. Insbesondere erfolgt die stoffschlüssige Fügung zwischen Fügelaschen und Fügesteg durch eine Punktschweißverbindung oder ein Punktschweißkleben. Diese Fügetechniken gewährleisten einen geringen Wärmeeintrag in die Bauteile beim stoffschlüssigen Fügen. Grundsätzlich ist auch ein Rollnahtschweißen oder ein Laserschweißen möglich.

Eine weitere vorteilhafte Ausführungsform sieht vor, dass in der Verstärkungsstruktur Einbauelemente vorgesehen sind. Einbauelemente können Lastleitkörper, Schottbleche und ähnliche innenliegende Verstärkungs- und/oder Funktionsbauteile sein. Einbauelemente sind insbesondere benachbart zu in der Batteriewanne vorgesehenen Innenstreben angeordnet. Die Einbauelemente liegen in der Verstärkungsstruktur seitlich vor den Innenstreben, die sich in der Batteriewanne zwischen gegenüberliegenden Seitenwänden der Batteriewanne erstrecken.

Einbauelemente sind vorzugsweise als offene oder geschlossene Profilbleche gebildet und erstrecken sich zwischen dem ersten Schenkel und dem zweiten Schenkel des Hohlprofils und/oder als durchgehender Lastpfad vom Schließblech bis zum Innenprofil. Innenliegende Verstärkungsbauteile können auch als Patches oder lokale Materialdoppelungen ausgeführt sein.

Des Weiteren können unterhalb der Batteriewanne und/oder unterhalb der Verstärkungsstruktur zumindest eine Tragstrebe und/oder eine Schutzplatte vorgesehen sein. Diese können unterschiedliche Funktionen übernehmen. Insbesondere tragen sie zum Halten des Batteriegewichts, also zur Gewichts- und/oder Lastaufnahme, bei oder dienen als zusätzlicher Schutz, insbesondere gegen ein Durchdringen oder Aufreißen von unten sowie als Seitencrashschutz.

Die Verstärkungsstruktur ist mit der Batteriewanne verbunden. Hierzu ist das Innenprofil mit der Batteriewanne gefügt. Insbesondere ist das Innenprofil mit seinem rückseitigen Steg an einer Seitenwand der Batteriewanne anliegend gefügt. Das offene Innenprofil ist von der Seite aus vorteilhaft zugänglich. In das offene Innenprofil können die Hülsen ebenso wie weitere Einbauelemente eingebracht und montiert werden. Bei der Montage erfolgt eine Ausrichtung und Justierung der Hülsen mittels der Passbleche. Durch die Einstellung der Position der Hülse im Hohlprofil, bevor die Hülse gefügt wird, werden Toleranzen ausgeglichen und die Montagepunkte positionsgenau eingestellt. Die Hülse bzw. deren Hülsenkörper kann in der Öffnung sowohl in Längsrichtung als auch in Querrichtung des Hohlprofils bzw. der Verstärkungsstruktur begrenzt bewegt werden. Weiterhin kann die Neigung der Hülsenlängsachse relativ zur Vertikalen begrenzt eingestellt werden. Durch das Passblech wird die Öffnung abgedeckt und die Position der Hülse und damit der Montagepunkt in seiner Position festgelegt. Hierzu wird das Passblech mit dem Schenkel stoffschlüssig gefügt. Das Passblech liegt am benachbarten Schenkel an. Insbesondere liegt das Passblech außenseitig auf dem ersten Schenkel, also dem oberen Schenkel des Innenprofils, auf. Die Fügung erfolgt stoffschlüssig zwischen dem Passblech und dem Schenkel, insbesondere durch Schweißen.

Nach der Montage der Hülsen im Innenprofil und gegebenenfalls von Einbauelementen wird die Offenseite des Innenprofils durch ein oder mehrere Schließbleche verschlossen. Dies erfolgt stoffschlüssig, vorzugsweise schweißtechnisch.

Neben Einbauelementen in der Verstärkungsstruktur können auch in der Batteriewanne Verstärkungs- bzw. Versteifungselemente integriert sein. Solche Verstärkungs- bzw. Versteifungselemente können durch Längs- und/oder Querprofile bzw. -streben gebildet sein, die sich am Wannenboden erstrecken.

Weiterhin kann ein Deckel den oberen Abschluss der Batteriewanne bilden. Besonders vorteilhaft ist der Batterieträger dazu ausgelegt und bestimmt, in die Karosserie bzw. das Fahrwerk eines Fahrzeugs integriert zu werden. Der Batterieträger bildet dabei ein tragendes Teil der Karosserie (Cell-to-Body). Hierbei kann der Fußboden des Fahrzeugs den Batteriedeckel bilden.

Die Batteriewanne ist insbesondere ein einstückig und werkstoffeinheitlich ausgeführtes Tiefziehteil. Auch das Innenprofil und/oder das Schließblech können pressformtechnisch bzw. tiefziehtechnisch hergestellt sein. Durch seinen U-förmigen Querschnitt besitzt das Innenprofil einen kanalartigen Verlauf, in welchem in Längsrichtung mit Abstand zueinander mehrere Hülsen angeordnet sind. Das zumindest eine Schließblech verschließt das Innenprofil auf zumindest einem Teil seiner Länge. Auf diese Weise bilden das Innenprofil und das Schließblech ein Hohlprofil. In Längsrichtung der Verstärkungsstruktur können mehrere Schließbleche vorgesehen sein. Das eine Schließblech oder die mehreren Schließbleche bilden die Außenwand der Verstärkungsstruktur.

Die Batteriewanne kann auch aus einer Blechplatine falttechnisch zur Batteriewanne geformt sein. Hierzu wird eine Blechplatine bereitgestellt, deren Geometrie der Abwicklung der Batteriewanne entspricht. Eine Kühlplatte kann optional direkt mit der Blechplatine gefügt werden. Bevor diese dann falttechnisch zur Batteriewanne geformt wird. Die Batteriewanne ist als Faltbauteil ausgeführt. Faltecken der Batteriewanne sind gefügt und abgedichtet.

Die Batteriewanne ebenso wie die Verstärkungsstruktur und die die Verstärkungsstruktur bildenden Bauteile, insbesondere das Innenprofil und/oder das Schließblech können durch Formhärten von Stahlblechen gebildet sein. Das Formhärten wird auch als Presshärten bezeichnet. Beim Formhärten wird ein Blech aus einem Mangan-Bor-Stahl auf eine Temperatur oberhalb der spezifischen Austenitisierungstemperatur des Werkstoffs erwärmt, in ein Umformwerkzeug eingelegt und zum Formbauteil warm umgeformt, wobei es während der Formgebung abkühlt. Im Umformwerkzeug eingespannt werden die Formbauteile durch die Kühlung gehärtet.

Hierbei können auch beschichtete formhärtbare Stahlbleche zum Einsatz gelangen. Insbesondere handelt es sich hierbei um mit einer Aluminium/Silicium-Beschichtung mit einer Zinklegierungsbeschichtung versehene Mangan-Bor-Stahlbleche. Die Bauteile der Verstärkungsstruktur und der Batteriewanne weisen Zugfestigkeiten von 1.000 MPa und höher auf.

Die Batteriewanne ebenso wie das Innenprofil und/oder das Außenprofil der Verstärkungsstruktur können auch aus extra- und ultrahochfesten Kaltformstählen gefertigt sein. Zumindest das Außenprofil weist dann eine Zugfestigkeit von mehr als 980 MPa auf. Insbesondere weist das Innenprofil eine Zugfestigkeit von größer gleich 1.180 MPa auf.

Sowohl für die Batteriewanne als die Bauteile der Verstärkungsstruktur, insbesondere das Innenprofil und/oder das Außenprofil, können aus maßgeschneiderten Blechen (Tailored Blanks) hergestellt sein. Hierbei können Tailored Blanks verschiedener Blechdicken und/oder voneinander verschiedenen Werkstoffgüten zum Einsatz gelangen. Auch der Einsatz von Bauteilen mit maßgeschneiderten Festigkeitseigenschaften ist möglich. Sowohl die Batteriewanne als auch das Innenprofil und/oder das Außenprofil können lokal weiche Bereiche (Soft Zones) besitzen. Diese Maßnahmen dienen zur gezielten Steigerung der Quersteifigkeit und Erhöhung der Crashperformance ebenso wie beispielsweise zur Risspräventation beim Schweißen oder zur Einstellung lokal geschwächter Zonen mit verbessertem Deformationsvermögen zur Energieabsorption.

Die Erfindung ist nachfolgend anhand von in den Zeichnungen dargestellten Ausführungsbeispielen näher beschrieben. Es zeigen
- Figur 1: einen erfindungsgemäßen Batterieträger in einer Querschnittsdarstellung;
- Figur 2: den Batterieträger in einer schematisierten Draufsicht;
- Figur 3: technisch schematisiert eine Draufsicht auf eine Verstärkungsstruktur in einer vergrößerten Darstellung;
- Figur 4: einen Querschnitt durch die Verstärkungsstruktur des Batterieträgers gemäß der Darstellung der Figur 3 entlang der Linie A-A;
- Figur 5: einen Querschnitt durch die Verstärkungsstruktur des Batterieträgers gemäß der Darstellung der Figur 3 entlang der Linie B-B;
- Figuren 6 bis10: jeweils einen Querschnitt durch eine Verstärkungsstruktur im Bereich einer Hülse;
- Figur 11: eine erste Ausführungsform eines Passblechs in einer Perspektive;
- Figur 12: eine zweite Ausführungsform eines Passblechs in einer Perspektive;
- Figur 13: eine weitere Ausführungsform eines erfindungsgemäßen Batterieträgers in einer Querschnittsdarstellung und
- Figur 14: den Batterieträger gemäß der Darstellung von Figur 13 in einer schematisierten Draufsicht.

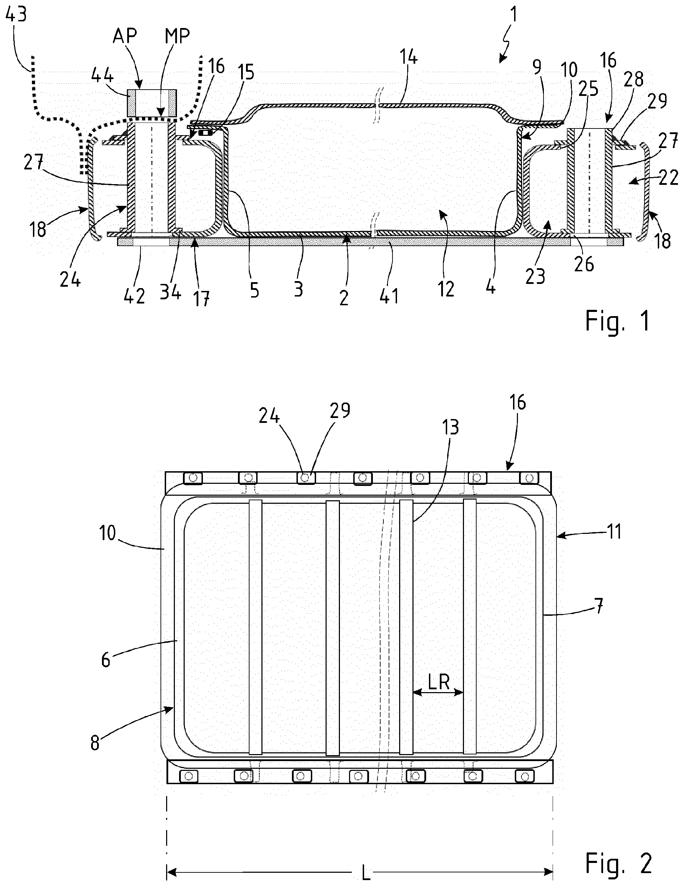

In den Figuren 1 bis 14 werden für gleiche oder funktionell einander entsprechende Bauteile bzw. Bauteilkomponenten die gleichen Bezugszeichen verwendet, auch wenn aus Gründen der Vereinfachung auf eine wiederholte Beschreibung verzichtet wird.

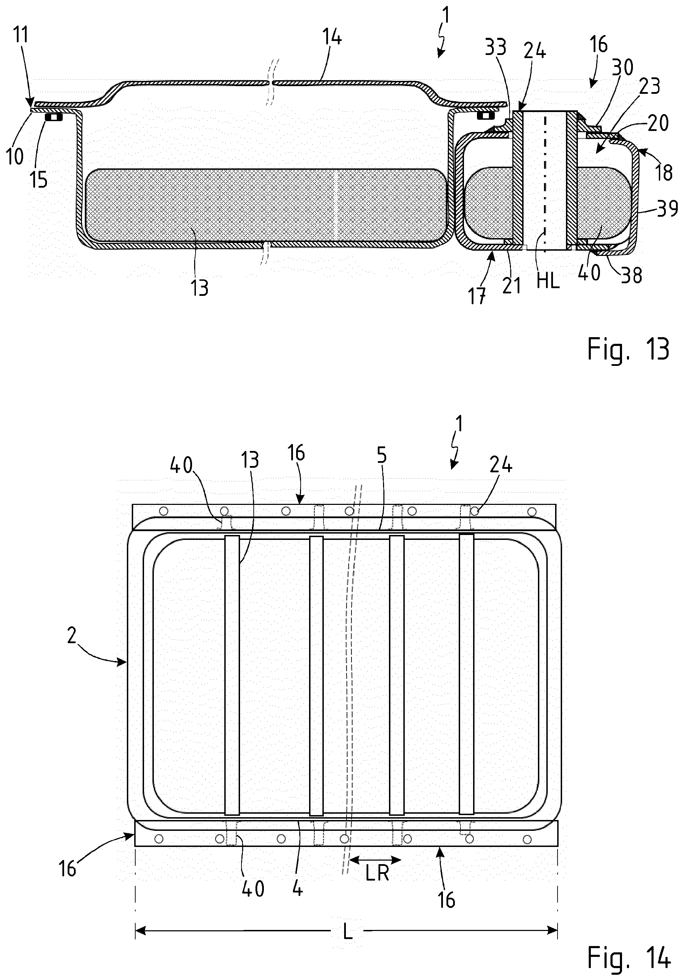

Die Figuren 1 bis 3 ebenso wie die Figuren 13 und 14 zeigen einen erfindungsgemäßen Batterieträger 1 sowie Bauteile davon.

Der Batterieträger 1 weist eine aus einem Stahlblech tiefgezogene Batteriewanne 2 auf. Die Batteriewanne 2 ist im Querschnitt rechteckig konfiguriert und weist einen Wannenboden 3 sowie Seitenwände, nämlich jeweils zwei Längswände 4, 5 und zwei Stirnwände 6, 7 auf, die sich zu einer umlaufenden Wannenwand 8 ergänzen. Am oberen Wannenrand 9 erstrecken sich entlang der Längswände 4, 5 und der Stirnwände 6, 7 nach außen gerichtete Flanschabschnitte 10, die sich ebenfalls umlaufend geschlossen zu einem oberen Flansch 11 ergänzen. Die Wannenwand 8 begrenzt einen Wanneninnenraum 12 der Batteriewanne 2.

Im Wanneninnenraum 12 sind, optional und wie in der Figur 2 und den Figuren 13 und 14 schematisiert dargestellt, eine Mehrzahl von Innenstreben 13 angeordnet. Die Innenstreben 13 erstrecken sich auf dem Wannenboden 3 quer zwischen den Längswänden 4, 5 und sind stoffschlüssig in der Batteriewanne 2 festgelegt.

Oberseitig ist die Batteriewanne 2 durch einen Deckel 14 verschlossen, der randseitig auf dem Flansch 11 unter Eingliederung einer hier nicht dargestellten umlaufenden Dichtung aufliegt. In den dargestellten Ausführungsbeispielen ist der Deckel 14 lösbar mittels Schraubverbindungsmitteln 15 mit der Batteriewanne 2 verbunden.

Der Batterieträger 1 weist eine Verstärkungsstruktur 16 auf. Die Verstärkungsstruktur 16 erstreckt sich jeweils außenseitig der Batteriewanne 2 vor den Längswänden 4, 5.

Wie insbesondere die Figuren 1 sowie die Figuren 4 und 5 und die Figuren 6 bis 10 zeigen, weist eine Verstärkungsstruktur 16 ein Innenprofil 17 und ein Schließblech 18 auf. Das Innenprofil 17 ist im Querschnitt U-förmig konfiguriert und weist einen rückwärtigen Steg 19 sowie einen ersten oberen Schenkel 20 sowie einen zweiten unteren Schenkel 21 und eine Offenseite 22 auf. Die Schenkel 20, 21 des Innenprofils 17 sind von der Batteriewanne 2 weg gerichtet. Der Steg 19 erstreckt sich parallel zur Seitenwand bzw. jeweils einer Längswand 4, 5. Die Offenseite 22 des Innenprofils 17 ist durch das Schließblech 18 zumindest längenabschnittsweise geschlossen.

Sowohl das Innenprofil 17 als auch das Schließblech 18 sind Blechformteile, die aus Stahlblechen geformt sind. Es kann sich um formgehärtete Stahlblechbauteile oder um kaltgeformte Formbauteile aus insbesondere ultrahochfesten (UHSS) Kaltformstählen handeln.

Die Verstärkungsstruktur 16 erstreckt sich in Längsrichtung LR einer Längswand 4, 5. Das Innenprofil 17 und das Schließblech 18 bilden zumindest auf dem überwiegenden Teil der Länge L der Verstärkungsstruktur 16 ein Hohlprofil 23.

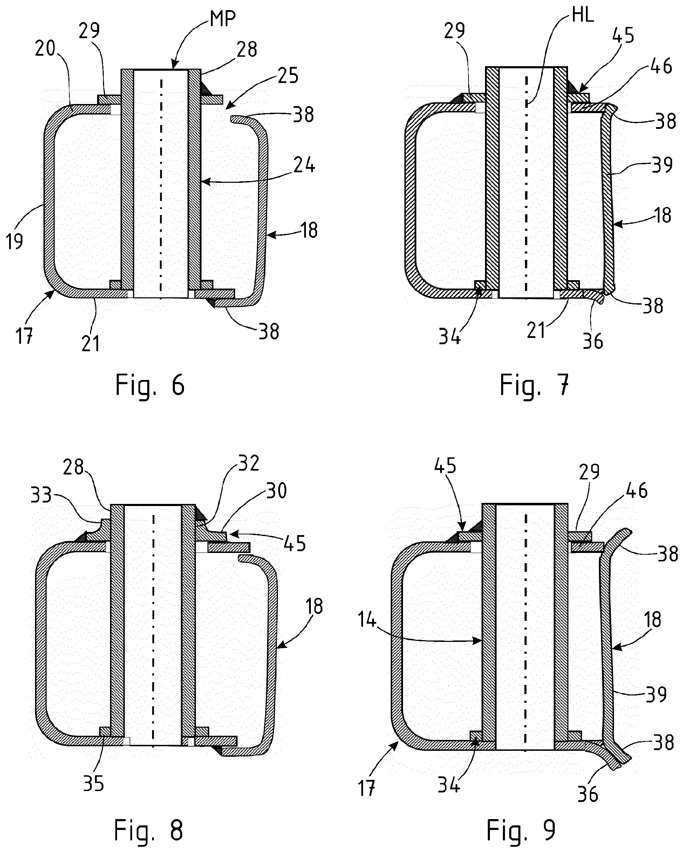

Im Hohlprofil 23 der Verstärkungsstruktur 16 sind mehrere Hülsen 24 vorgesehen. Diese erstrecken sich vertikal zwischen dem ersten Schenkel 20 und dem zweiten Schenkel 21 des Innenprofils 17. Im ersten oberen Schenkel 20 ist eine erste Öffnung 25 und im zweiten unteren Schenkel 21 ist eine zweite Öffnung 26 vorgesehen. Die Öffnungen 25, 26 werden durch die Hülsen verbunden (siehe hierzu auch die Figuren 6 bis 10). Die Hülsen 24 weisen einen Hülsenkörper 27 auf und ragen mit einem Hülsenabschnitt 28 durch die erste obere Öffnung 25. Oberseitig ist die erste Öffnung 25 durch ein Passblech 29, 30 bedeckt. Das Passblech 29, 30 weist einen Durchgang 31 auf. Die Hülse 24 ist mit dem Hülsenabschnitt 28 durch den Durchgang 31 gefügt und ragt oberseitig gegenüber dem ersten Schenkel 20 des Innenprofils 17 vor.

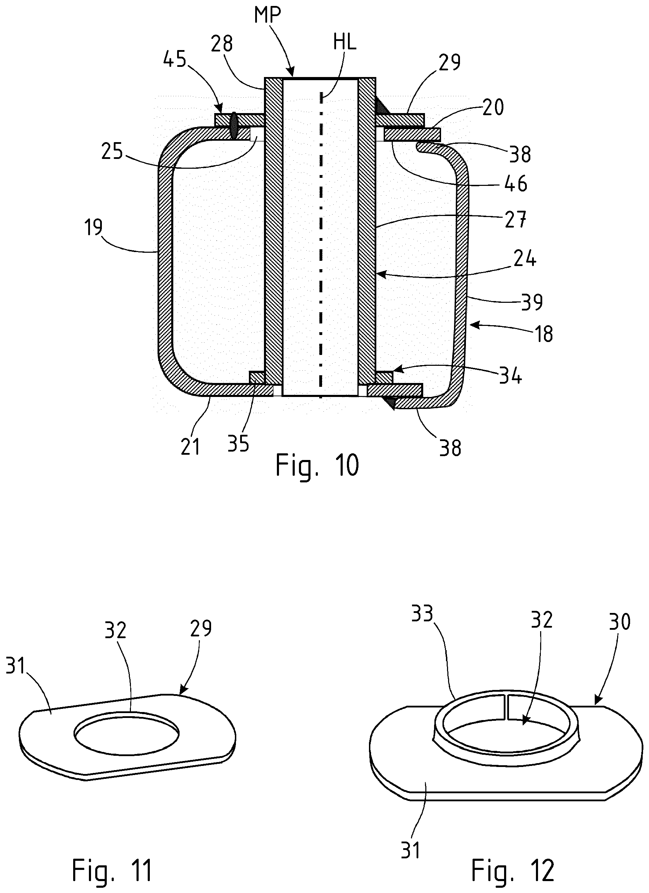

Zwei Ausführungsformen eines Passblechs 29, 30 sind in den Figuren 11 und 12 dargestellt. Das Passblech 29 gemäß der Darstellung der Figur 11 weist einen ebenen Scheibenkörper 31 mit dem Durchgang 32 auf. Das Passblech 30 gemäß der Darstellung der Figur 12 weist ebenfalls einen ebenen Scheibenkörper 31auf, wobei der Durchgang 32 einen in sich geschlossenen umlaufenden Kragen 33 aufweist. Der umlaufende Kragen 33 im Passblech 30 ist nach Art eines Durchzugs materialeinheitlich einstückig aus dem Scheibenkörper 31 gezogen. Halbfertigzeug für die Herstellung eines Passblechs 30 kann ein Scheibenkörper 31 sein wie in der Figur 11 dargestellt.

Eine erste Öffnung 25 im ersten Schenkel 20 kann in sich geschlossen sein, also umlaufend durch einen Rand begrenzt sein. Eine solche Öffnung 25 ist beispielsweise rund. Eine runde erste Öffnung 25 ist in der Ausführungsform gemäß der Darstellungen der Figuren 1, 5 sowie 7 bis 10 und 13 dargestellt.

Eine erste Öffnung 25 im ersten oberen Schenkel 20 kann auch randseitig nach vorne hin zum freien Ende des Schenkels 20 und dem Außenprofil 18 hin, offen sein. Dies zeigt die Darstellung der Figur 6. Die Öffnung 25 ist in dieser Ausgestaltung schlitz- oder langlochartig ausgeführt und am freien Ende des Schenkels 20 offen.

Am unteren Ende weisen die Hülsen 24 einen unteren Bund 34 auf. Der Bund 34 kann durch ein Scheibenelement 35 gebildet sein. Der Bund 34 kann aber auch durch eine Umstellung am unteren Ende des Hülsenkörper 27 eine Hülse 24 ausgeformt sein. Mit dem unteren Bund 34 steht eine Hülse 24 innenseitig auf dem zweiten unteren Schenkel 21 auf.

Die Passbleche 29, 30 sind dazu eingerichtet und bestimmt Toleranzen auszugleichen und die Position einer Hülse 24 im Hohlprofil 23 zu justieren bevor die Hülse 24 gefügt wird und damit die endgültige Position eines durch die Hülse 24 bereitgestellten bzw. realisierten Montagepunktes festgelegt wird. Hierzu können die Hülsen 24 relativ zu der ersten Öffnung 25 im ersten Schenkel 20 und relativ zu der zweiten Öffnung 26 im zweiten Schenkel 21 verlagert werden. Des Weiteren kann die Neigung der Hülsenlängsachse HL relativ zu einer Vertikalen in einem Winkel eingestellt werden. Hierzu kann das Passblech 29, 30 in Längsrichtung und in Querrichtung der Verstärkungsstruktur 16 auf dem ersten oberen Schenkel 20 bewegt werden. Nach Einstellung der korrekten Position wird die Hülse 24 fixiert. Hierzu wird das Passblech 29, 30 mit dem ersten Schenkel 20 und der Hülse 24 stoffschlüssig gefügt, insbesondere verschweißt.

Die Passbleche 29, 30 decken die erste Öffnung 25 im ersten oberen Schenkel 20 mit einer Überlappung 45 ab. Das Passblech 29, 30 umschließt die Hülse 24 bzw. den Hülsenabschnitt 28 und ragt soweit nach außen, dass es über den Rand 46 der Öffnung 25 ragt und so die Öffnung 25 abdeckt. Im Bereich der Überlappung 45 ist das Schließblech 29, 30 dann zumindest bereichsweise mit dem ersten Schenkel 20 gefügt.

Bei der Ausführungsform des Innenprofils 17 gemäß den Darstellungen der Figuren 7 und 9 können der erste Schenkel 20 und der untere Schenkel 21 Fügelaschen 36 aufweisen. Die Fügelaschen 36 erstrecken sich an Längskantenabschnitten eines Schenkels 20, 21 nach außen. Entlang der Länge des Innenprofils 17 ist eine Mehrzahl von Fügelaschen 36 alternierend angeordnet. Zwischen den einzelnen Fügelaschen 36 befinden sich Freiräume 37.

Das Schließblech 18 weist Fügestege 38 auf. Diese erstrecken sich jeweils entlang der äußeren Längsränder des Schließblechs 18. Mit den Fügestegen 38 liegt das Schließblech 18 im Bereich einer Fügelasche 36 am Innenprofil 17 an. Im Bereich der Freiräume 37 liegt das Schließblech 18 mit den äußeren Fügestegen 38 jeweils an einem Schenkel 20, 21 des Innenprofils 17 an dessen Längskante an.

Das Schließblech weist eine Außenwand 39 auf. Die Außenwand 39 verläuft im Querschnitt vertikal, im Wesentlichen parallel zum rückseitigen Steg 19 des Innenprofils 17. Am oberen und am unteren Längsrand des Schließblechs 18 sind jeweils ein Fügesteg 38 vorgesehen. Dieser ist zur Außenwand 39 quer gerichtet.

Bei den Ausführungsformen des Schließblechs 18 gemäß den Darstellungen in den Figuren 1, 4, 5, 6, 8 und 13 sind die Fügestege 38 nach innen in Richtung zum Innenprofil 17 umgestellt.

Bei den Ausführungsformen des Schließblechs 18 gemäß den Darstellungen der Figuren 7 und 9 sind die Fügestege 38 nach außen von den Enden des ersten Schenkels 20 und/oder des zweiten Schenkels 21 weggerichtet.

Der Einbau der Hülsen 24 ebenso wie die Montage und Festlegung von Einbauelementen erfolgt von außen bei offenem Innenprofil 17, bevor dieses durch das Schließblech 18 zumindest längenabschnittsweise geschlossen wird. Hierzu wird das Schließblech 18 mit dem Innenprofil 17 stoffschlüssig gefügt, insbesondere durch Punktschweißen. Dies erfolgt insbesondere zwischen den Fügelaschen 36 und den Fügestegen 38.

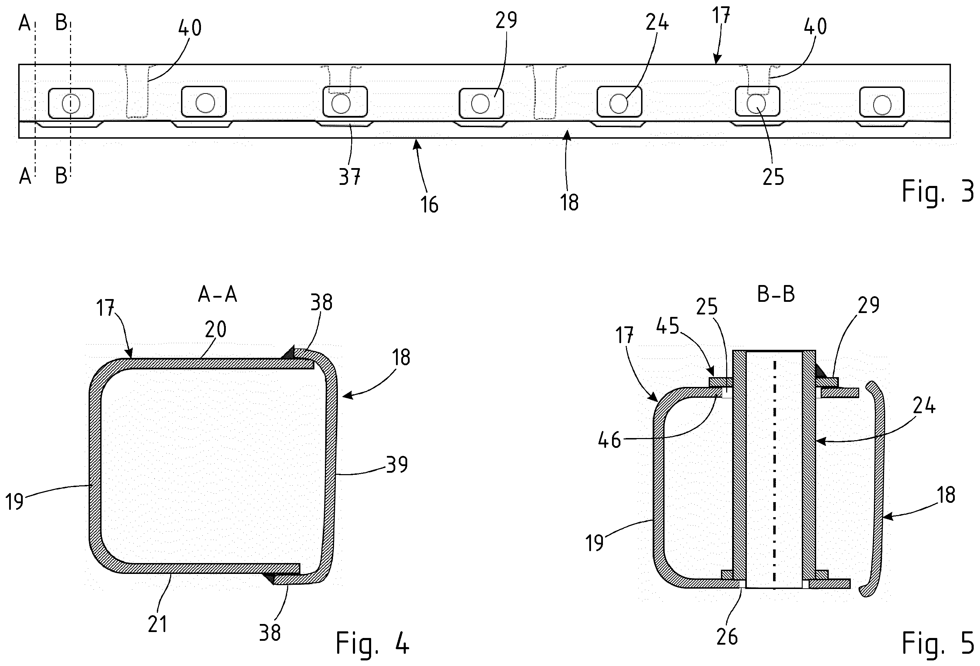

Die Ausführungsform der Batteriewanne 2 entsprechend der Darstellung in den Figuren 13 und 14 entspricht vom grundsätzlichen Aufbau der zuvor beschriebenen. Vereinfacht dargestellt ist ein Einbauelement 40, welches in das Hohlprofil 23 bzw. das Innenprofil 17 der Verstärkungsstruktur 16 eingebaut ist. Solche Einbauelemente 40 können beispielsweise Lastleitkörper oder Schottbleche sein. Diese sind mit dem Innenprofil 17 gefügt, insbesondere stoffschlüssig gefügt. Einbauelemente 40, die hutförmig konfiguriert sind und unterschiedliche Höhen aufweisen, sind in der Darstellung der Figur 3 ebenso wie in der Figur 14 technisch vereinfacht dargestellt.

Unterhalb der Batteriewanne 2 und der Verstärkungsstruktur 16 kann eine Tragstrebe 41 vorgesehen sein. Dies zeigt die Darstellung der Figur 1. Im dargestellten Ausführungsbeispiel weist die Tragstrebe 41 Löcher 42 auf, die mit den unteren Öffnungen 26 in den unteren Schenkeln 21 und den Hülsen 24 kommunizieren. Die Tragstrebe 41 kann plattenartig ausgeführt oder profiliert gestaltet sein.

In der linken Bildhälfte der Figur 1 ist des Weiteren andeutungsweise ein Seitenschweller 43 eines Kraftfahrzeugs und die Anbindung des Batterieträgers 1 an das Kraftfahrzeug dargestellt. Im Kraftfahrzeug bzw. dem Seitenschweller 43 sind Anschraubpunkte AP in Form von Gewindeanschlüssen 44 vorgegeben. Über die Hülsen 24 werden die Montagepunkte MP bereitgestellt, über welche der Batterieträger 1 mittels Schraubverbindungsmitteln am Kraftfahrzeug festgelegt wird. Die finale Einstellung der Montagepunkte MP und damit die Justierung zwischen den Anschraubpunkten AP und den Montagepunkten MP erfolgt durch die Einstellung und Ausrichtung der Lage der Hülsen 24 innerhalb der Verstärkungsstruktur 16 über die Passbleche 29, 30. Zur Montage des Batterieträgers 1 werden Schraubverbindungsmittel durch die Hülsen 24 geführt und mit Gewindeanschlüssen 44 lösbar gekoppelt.

Anstelle eines Seitenschwellers kann es sich auch um ein anderes Bodenstrukturelement des Kraftfahrzeuges handeln, an welchem der Batterieträger 1 festgelegt ist bzw. werden kann, beispielsweise weiter innenliegende Längsträger oder ein Leiterrahmenlängsträger.

### Bezugszeichen:

- 1 -: Batterieträger
- 2-: Batteriewanne
- 3-: Wannenboden
- 4-: Längswand
- 5-: Längswand
- 6-: Stirnwand
- 7-: Stirnwand
- 8-: Wannenwand
- 9-: Wannenrand
- 10-: Flanschabschnitt
- 11 -: Flansch
- 12-: Wanneninnenraum
- 13-: Innenstreben
- 14-: Deckel
- 15-: Schraubverbindungsmittel
- 16-: Verstärkungsstruktur
- 17-: Innenprofil
- 18-: Außenprofil
- 19-: Steg
- 20-: Schenkel
- 21 -: Schenkel
- 22-: Offenseite
- 23-: Hohlprofil
- 24-: Hülse
- 25-: Öffnung
- 26-: Öffnung
- 27-: Hülsenkörper
- 28-: Hülsenabschnitt
- 29-: Passblech
- 30-: Passblech
- 31 -: Scheibenkörper
- 32 -: Durchgang
- 33 -: Kragen
- 34 -: unterer Bund
- 35 -: Scheibenelement
- 36 -: Fügelasche
- 37 -: Freiraum
- 38 -: Fügesteg
- 39 -: Außenwand
- 40 -: Einbauelement
- 41 -: Tragstrebe
- 42 -: Loch
- 43 -: Seitenschweller
- 44 -: Gewindeanschluss
- 45 -: Überlappung
- 46 -: Rand von 25

- HL -: Hülsenlängsachse
- L -: Länge
- LR -: Längsrichtung
- AP -: Anschraubpunkt
- MP -: Montagepunkt

## Patentansprüche

1. Batterieträger (1) mit einer Batteriewanne (2) und einer Verstärkungsstruktur (16), wobei die Verstärkungsstruktur (16) ein Hohlprofil (23) aufweist, welches außenseitig vor einer Seitenwand (4, 5) der Batteriewanne (2) angeordnet ist, wobei das Hohlprofil (23) einen ersten Schenkel (20) mit einer ersten Öffnung (25) und einen zweiten Schenkel (21) mit einer zweiten Öffnung (26) aufweist, wobei die Schenkel (20, 21) mit Abstand zueinander angeordnet sind und eine Hülse (24) vorgesehen ist, welche sich zwischen den Schenkeln (20, 21) erstreckt und die Öffnungen (25, 26) in den Schenkeln (20, 21) verbindet, **dadurch gekennzeichnet, dass** ein Passblech (29, 30) mit einem Durchgang (32) vorgesehen ist, wobei die Hülse (24) durch den Durchgang (32) geführt ist und das Passblech (29) die erste Öffnung (25) im ersten Schenkel (20) oder die zweite Öffnung im zweiten Schenkel bedeckt.

2. Batterieträger nach Anspruch 1, **dadurch gekennzeichnet, dass** das Passblech (29, 39) dazu eingerichtet und bestimmt ist, Toleranzen auszugleichen und/oder die Position der Hülse (24) im Hohlprofil (23) vor einer Fügung der Hülse (24) zu justieren.

3. Batterieträger nach Anspruch 1 oder 2, **dadurch gekennzeichnet, dass** das Passblech (29, 30) außenseitig am ersten Schenkel (20) anliegt.

4. Batterieträger nach einem der Ansprüche 1 bis 3, **dadurch gekennzeichnet, dass** das Passblech (29, 30) die erste Öffnung (25) und/oder zweite Öffnung randseitig mit einer Überlappung (45) überdeckt.

5. Batterieträger nach einem der Ansprüche 1 bis 4, **dadurch gekennzeichnet, dass** die erste Öffnung (25) und/oder die zweite Öffnung randseitig offen ist.

6. Batterieträger nach einem der Ansprüche 1 bis 5, **dadurch gekennzeichnet, dass** der Durchgang (32) einen Kragen (32), insbesondere einen umlaufenden Kragen, aufweist.

7. Batterieträger nach Anspruch 6, **dadurch gekennzeichnet, dass** der Kragen (33) nach außen vom Hohlprofil (23) weg gerichtet ist.

8. Batterieträger nach Anspruch 5, **dadurch gekennzeichnet, dass** ein Passblech innenseitig am ersten Schenkel anliegt und der Kragen nach innen gerichtet ist.

9. Batterieträger nach einem der Ansprüche 1 bis 8, **dadurch gekennzeichnet, dass** das Hohlprofil (23) ein Innenprofil (17) und ein Außenprofil (18) umfasst, wobei das Innenprofil (17) im Querschnitt U-förmig konfiguriert ist mit einem Steg (19) und dem ersten Schenkel (20) und dem zweiten Schenkel (21), wobei die Schenkel (20, 21) des Innenprofils (17) von der Batteriewanne (2) weg weisen und das Innenprofil (17) zumindest längenabschnittsweise durch das Außenprofil (18) geschlossen ist.

10. Batterieträger nach einem der Ansprüche 1 bis 9, **dadurch gekennzeichnet, dass** die Hülse (24) mit einem oberen Hülsenabschnitt () durch die erste Öffnung (25) im ersten Schenkel (20) geführt ist und gegenüber einer Außenseite (18) des ersten Schenkels (20) vorsteht und/oder mit einem unteren Hülsenabschnitt durch die zweite Öffnung im zweiten Schenkel geführt ist und gegenüber einer Außenseite des zweiten Schenkels vorsteht.

11. Batterieträger nach einem der Ansprüche 1 bis 10, **dadurch gekennzeichnet, dass** die Hülse (24) einen oberen und/oder einen unteren Bund (34) aufweist.

12. Batterieträger nach Anspruch 10, **dadurch gekennzeichnet, dass** die Hülse (24) mit einem unteren Bund (34) innenseitig auf dem zweiten Schenkel (21) steht oder außenseitig am zweiten Schenkel anliegt.

13. Batterieträger nach einem der Ansprüche 1 bis 12, **dadurch gekennzeichnet, dass** in der Verstärkungsstruktur (16) Einbauelemente (40) vorgesehen sind.

14. Batterieträger nach einem der Ansprüche 1 bis 13, **dadurch gekennzeichnet, dass** unterhalb der Batteriewanne (2) und/oder der Verstärkungsstruktur (16) zumindest eine Tragstrebe (41) und/oder eine Schutzplatte vorgesehen sind.

15. Batterieträger nach einem der Ansprüche 1 bis 14, **dadurch gekennzeichnet, dass** ein erstes Passblech (29) die erste Öffnung (25) im ersten Schenkel (20) bedeckt und ein zweites Passblech die zweite Öffnung im zweiten Schenkel bedeckt.

## Claims

1. A battery support (1) with a battery tray (2) and a reinforcement structure (16), wherein the reinforcement structure (16) has a hollow profile (23) which is arranged on the outside in front of a side wall (4, 5) of the battery tray (2), wherein the hollow profile (23) has a first leg (20) with a first opening (25) and a second leg (21) with a second opening (26), wherein the legs (20, 21) are arranged at a distance from one another and a sleeve (24) is provided which extends between the legs (20, 21) and connects the openings (25, 26) in the legs (20, 21), **characterized in that** a fitting plate (29, 30)with a passage (32) is provided, wherein the sleeve (24) is guided through the passage (32) and the fitting plate (29) covers the first opening (25) in the first leg (20) or the second opening in the second leg.

2. The battery support according to claim 1, **characterized in that** the fitting plate (29, 39) is configured and intended to compensate for tolerances and/or to adjust the position of the sleeve (24) in the hollow profile (23) before joining the sleeve (24).

3. The battery support according to claim 1 or 2 **characterized in that** the fitting plate (29, 30) rests on the outside of the first leg (20).

4. The battery support according to any one of claims 1 to 3, **characterized in that** the fitting plate (29, 30) covers the first opening (25) and/or second opening at the edge with an overlap (45).

5. The battery support according to any one of claims 1 to 4, **characterized in that** the first opening (25) and/or the second opening is open at the edge.

6. The battery support according to any one of claims 1 to 5, **characterized in that** the passage (32) has a collar (32), in particular a circumferential collar.

7. The battery support according to claim 6, **characterized in that** the collar (33) is directed outwards away from the hollow profile (23).

8. The battery support according to claim 5, **characterized in that** a fitting plate rests on the inside of the first leg and the collar is directed inwards.

9. The battery support according to any one of claims 1 to 8, **characterized in that** the hollow profile (23) comprises an inner profile (17) and an outer profile (18), wherein the inner profile (17) is configured in a U-shaped cross-section with a web (19) and the first leg (20) and the second leg (21), wherein the legs (20, 21) of the inner profile (17) point away from the battery tray (2) and the inner profile (17) is closed at least in lengthwise sections by the outer profile (18).

10. The battery support according to any one of claims 1 to 9, **characterized in that** the sleeve (24) is guided with an upper sleeve section () through the first opening (25) in the first leg (20) and protrudes relative to an outer side (18) of the first leg (20) and/or is guided with a lower sleeve section through the second opening in the second leg and protrudes relative to an outer side of the second leg.

11. The battery support according to any one of claims 1 to 10, **characterized in that** the sleeve (24) has an upper and/or a lower collar (34).

12. The battery support according to claim 10, **characterized in that** the sleeve (24) with a lower collar (34) stands on the inside of the second leg (21) or rests on the outside of the second leg.

13. The battery support according to any one of claims 1 to 12, **characterized in that** mounting elements (40) are provided in the reinforcement structure (16).

14. The battery support according to any one of claims 1 to 13, **characterized in that** at least one support strut (41) and/or a protective plate are provided below the battery tray (2) and/or the reinforcement structure (16).

15. The battery support according to any one of claims 1 to 14, **characterized in that** a first fitting plate (29) covers the first opening (25) in the first leg (20) and a second fitting plate covers the second opening in the second leg.

## Revendications

1. Support de batterie (1) avec un bac de batterie (2) et une structure de renfort (16), dans lequel la structure de renfort (16) présente un profilé creux (23) qui est disposé côté extérieur devant une paroi latérale (4, 5) du bac de batterie (2), dans lequel le profilé creux (23) présente une première branche (20) avec une première ouverture (25) et une deuxième branche (21) avec une deuxième ouverture (26), dans lequel les branches (20, 21) sont disposées de manière espacée l'une de l'autre et un manchon (24) est prévu qui s'étend entre les branches (20, 21) et relie les ouvertures (25, 26) dans les branches (20, 21), **caractérisé en ce qu'**une tôle d'ajustage (29, 30) est prévue avec un passage (32), dans lequel le manchon (24) est guidé à travers le passage (32) et la tôle d'ajustage (29) recouvre la première ouverture (25) dans la première branche (20) ou la deuxième ouverture dans la deuxième branche.

2. Support de batterie selon la revendication 1, **caractérisé en ce que** la tôle d'ajustage (29, 39) est mise au point pour et se destine à compenser des tolérances et/ou à ajuster la position du manchon (24) dans le profilé creux (23) avant un assemblage du manchon (24).

3. Support de batterie selon la revendication 1 ou la revendication 2, **caractérisé en ce que** la tôle d'ajustage (29, 30) repose côté extérieur sur la première branche (20).

4. Support de batterie selon l'une quelconque des revendications 1 à 3, **caractérisé en ce que** la tôle d'ajustage (29, 30) recouvre la première ouverture (25) et/ou la deuxième ouverture côté bord par un chevauchement (45).

5. Support de batterie selon l'une quelconque des revendications 1 à 4, **caractérisé en ce que** la première ouverture (25) et/ou la deuxième ouverture sont ouvertes côté bord.

6. Support de batterie selon l'une quelconque des revendications 1 à 5, **caractérisé en ce que** le passage (32) présente un rebord (32), en particulier un rebord périphérique.

7. Support de batterie selon la revendication 6, **caractérisé en ce que** le rebord (33) est dirigé vers l'extérieur à l'opposé du profilé creux (23).

8. Support de batterie selon la revendication 5, **caractérisé en ce qu'**une tôle d'ajustage repose côté intérieur sur la première branche et le rebord est dirigé vers l'intérieur.

9. Support de batterie selon l'une quelconque des revendications 1 à 8, **caractérisé en ce que** le profilé creux (23) comprend un profilé intérieur (17) et un profilé extérieur (18), dans lequel le profilé intérieur (17) est configuré en forme de U dans la section transversale avec une nervure (19) et la première branche (20) et la deuxième branche (21), dans lequel les branches (20, 21) du profilé intérieur (17) pointent à l'opposé du bac de batterie (2) et le profilé intérieur (17) est fermé au moins par section longitudinale par le profilé extérieur (18).

10. Support de batterie selon l'une quelconque des revendications 1 à 9, **caractérisé en ce que** le manchon (24) est guidé avec une section de manchon supérieure () à travers la première ouverture (25) dans la première branche (20) et fait saillie en face d'un côté extérieur (18) de la première branche (20) et/ou est guidé avec une section de manchon inférieure à travers la deuxième ouverture dans la deuxième branche et fait saillie en face d'un côté extérieur de la deuxième branche.

11. Support de batterie selon l'une quelconque des revendications 1 à 10, **caractérisé en ce que** le manchon (24) présente un collet supérieur et/ou inférieur (34).

12. Support de batterie selon la revendication 10, **caractérisé en ce que** le manchon (24) repose avec un collet inférieur (34) côté intérieur sur la deuxième branche (21) ou repose côté extérieur sur la deuxième branche.

13. Support de batterie selon l'une quelconque des revendications 1 à 12, **caractérisé en ce que** des éléments de montage (40) sont prévus dans la structure de renfort (16).

14. Support de batterie selon l'une quelconque des revendications 1 à 13, **caractérisé en ce qu'**au moins une barre de support (41) et/ou une plaque de protection sont prévues sous le bac de batterie (2) et/ou la structure de renfort (16).

15. Support de batterie selon l'une quelconque des revendications 1 à 14, **caractérisé en ce qu'**une première tôle d'ajustage (29) recouvre la première ouverture (25) dans la première branche (20) et une deuxième tôle d'ajustage recouvre la deuxième ouverture dans la deuxième branche.
